# EUROPEAN PATENT APPLICATION

(11) **EP 2 476 524 A1**
(43) Date of publication of application: **18.07.2012**
(21) Application number: 12150786.7
(22) Date of filing: 11.01.2012
(51) Int. Cl.: B27M 1/08, B23Q 7/04, B27C 9/02

(54) **Vertical extension work centre**

(30) Priority: 14.01.2011 IT PD20110007
(71) Applicant: Working Process S.R.L., 29020 Settima di Gossolengo, Piacenza (IT)
(72) Inventor: Schiavetta, Massimo, I-29020 PIACENZA (IT)
(74) Representative: Mitola, Marco

(57) **Abstract**

A work centre (4) for drilling, milling, tenoning and profiling operations of elongated wooden pieces (8), comprising a base (12) which extends mainly in a longitudinal direction (X-X), from a first to a second end (16,20), a portal structure in relation to said base (12), comprising a pair of uprights (24) connected by a crossbar (28), the uprights (24) extending substantially in a vertical direction (Y-Y) perpendicular to said longitudinal direction (X-X), at least one pair of gripping elements (32) to grip the piece (8), move it and block it during the tenoning, drilling and milling operations. Advantageously, the gripping elements (32) are respectively mounted on a first and on a second piece-holder carriage (40,44), opposite each other in said vertical direction (Y-Y), and the first and second piece-holder carriages (40,44) are independently mobile in a vertical direction (Y-Y) so as to be able to move the piece (8) and exchange the piece (8) with each other in the vertical direction (Y-Y).

## Description

The present invention relates to a vertical extension work centre, in particular for tenoning, drilling, milling and profiling operations on elongated, preferably wooden, pieces, suitable for making doors and windows.

It is known of in the art to make work centres for processing preferably wooden doors and windows, which perform a plurality of processing operations on the piece.

The piece, usually in the form of untreated quadrangular cross-section bars, is gripped by suitable clamps and then processed, in various steps, by processing heads, so as to perform all the required operations of tenoning, drilling, milling and profiling.

The work stations of the prior art have a horizontal extension.

In fact, in the solutions of the prior art the gripping clamps of the pieces and the piece-holder carriages, which enable the exchange of the piece between various clamps to permit processing of the various sides each time, are all positioned perpendicular to the support plane of the work centre, and therefore move in directions parallel to said support plane.

This architecture of the work centres of the prior art has some drawbacks.

In fact, first of all work centres having a horizontal extension occupy a considerable amount of space.

In addition, solutions having a horizontal extension envisage a complex portal structure in which a crossbar, supported by at least two uprights, supports the processing heads which must process the pieces, from above. Such structure tends to bend and must therefore be made with considerably thick uprights and crossbar to prevent the bending from negatively influencing the final tolerances of the processed pieces.

Work centres having a horizontal extension are therefore extremely heavy and expensive to make if limited processing tolerances are to be maintained.

In the light of the above, it follows that to guarantee low processing tolerances the work centres of the prior art, extending horizontally, must be made with structural dimensions which make them cumbersome, heavy and expensive to produce.

The need is therefore felt to make a work centre having reduced production costs and structural dimensions without foregoing high quality standards in terms of processing precision and final tolerances of the pieces.

Such need is met by a work centre according to claim 1.

Other embodiments of the work centre according to the invention are described in the subsequent claims.

Further characteristics and advantages of the present invention will be more clearly comprehensible from the description given below of its preferred and non-limiting embodiments, wherein:

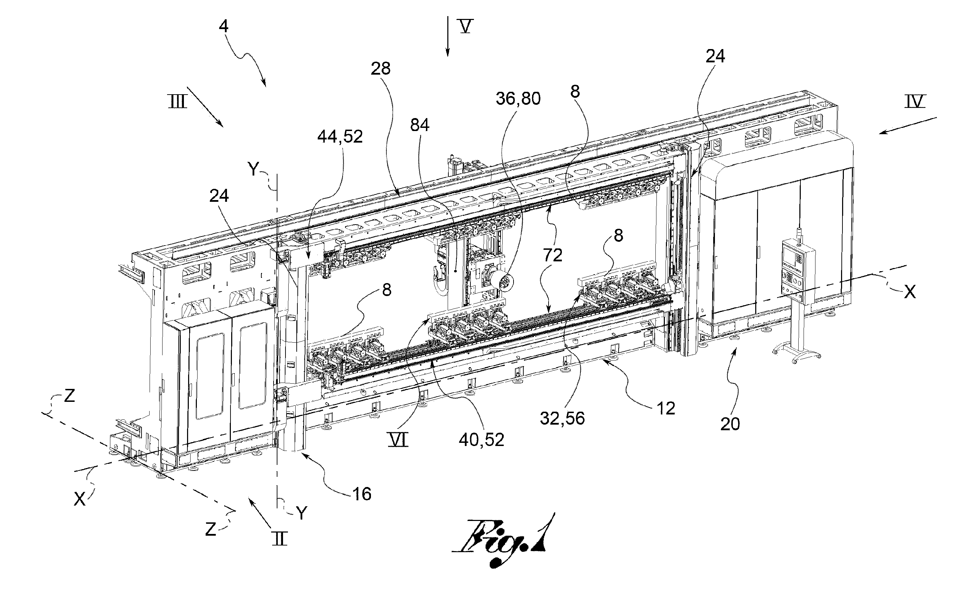

figure 1 shows a perspective view of a work centre according to one embodiment of the present invention;

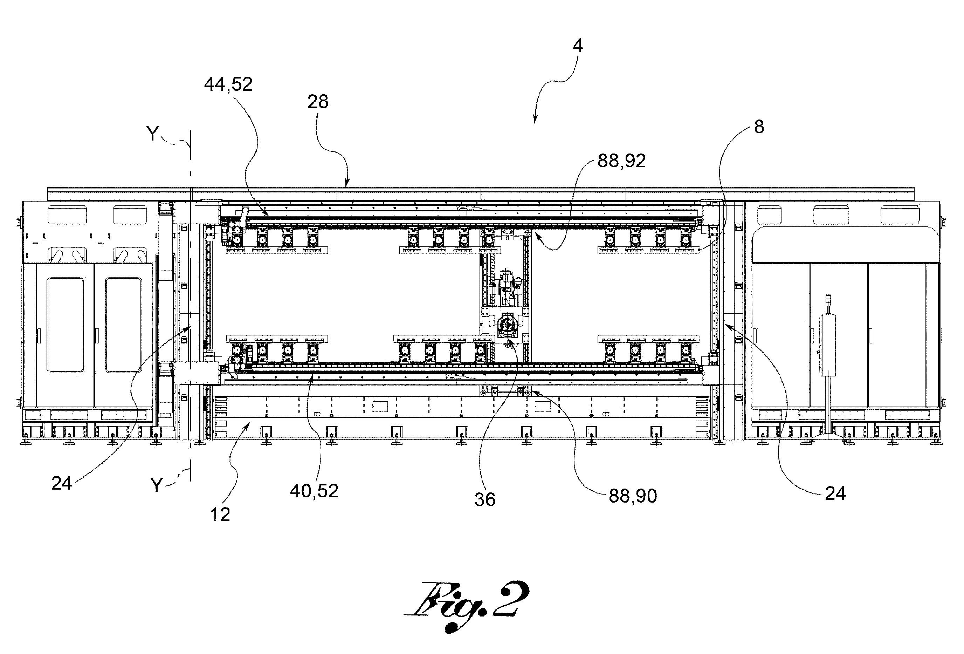

figure 2 shows a front view of the work centre in figure 1, from the side of the arrow II in figure 1;

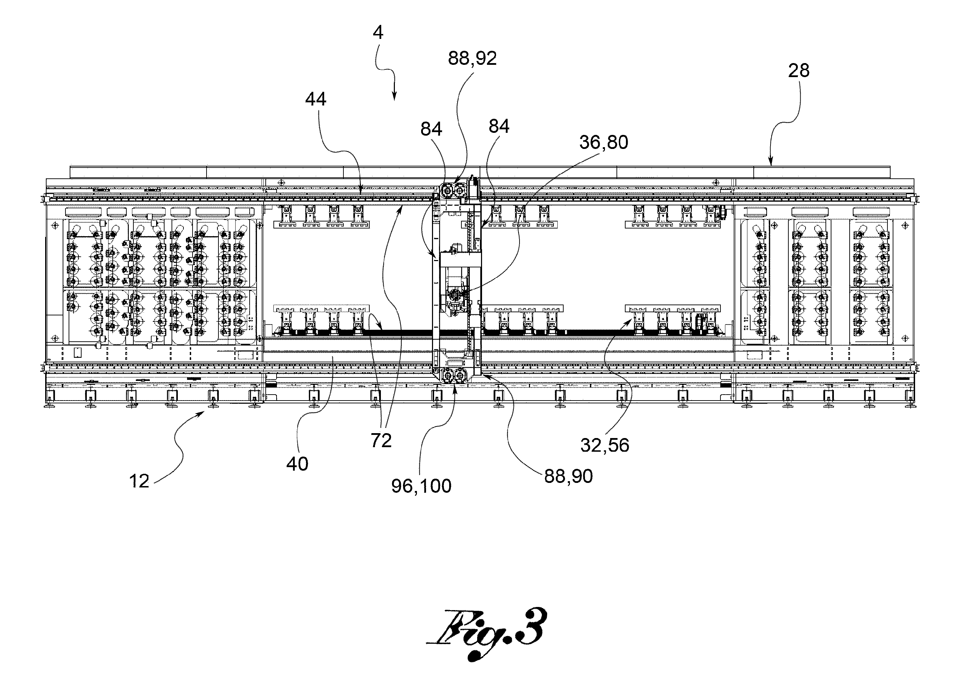

figure 3 shows a rear view of the work centre in figure 1, from the side of the arrow III in figure 1;

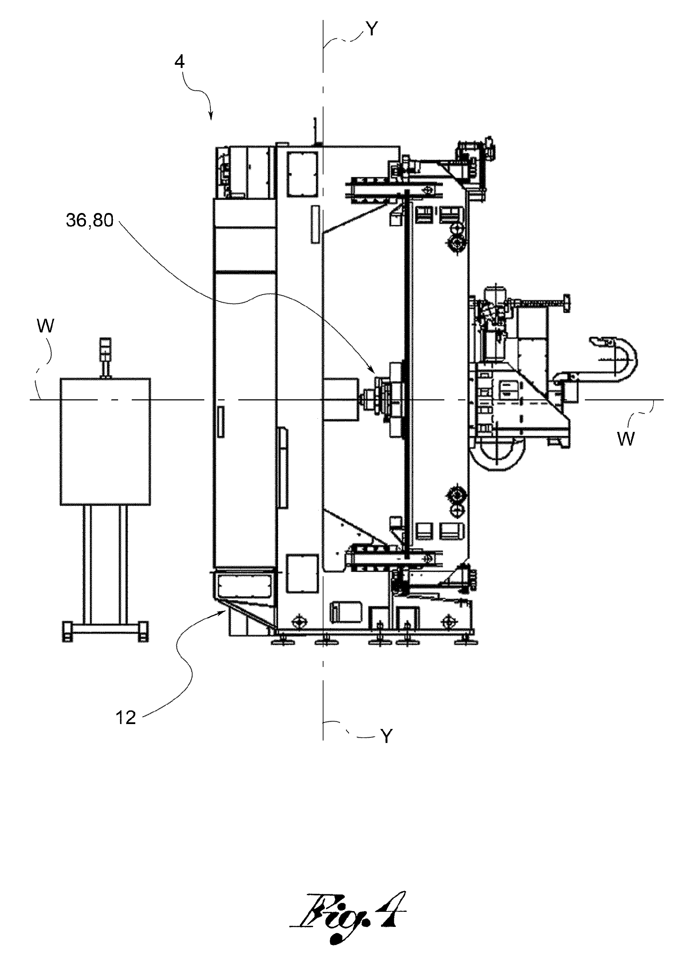

figure 4 shows a side view of the work centre in figure 1, from the side of the arrow IV in figure 1;

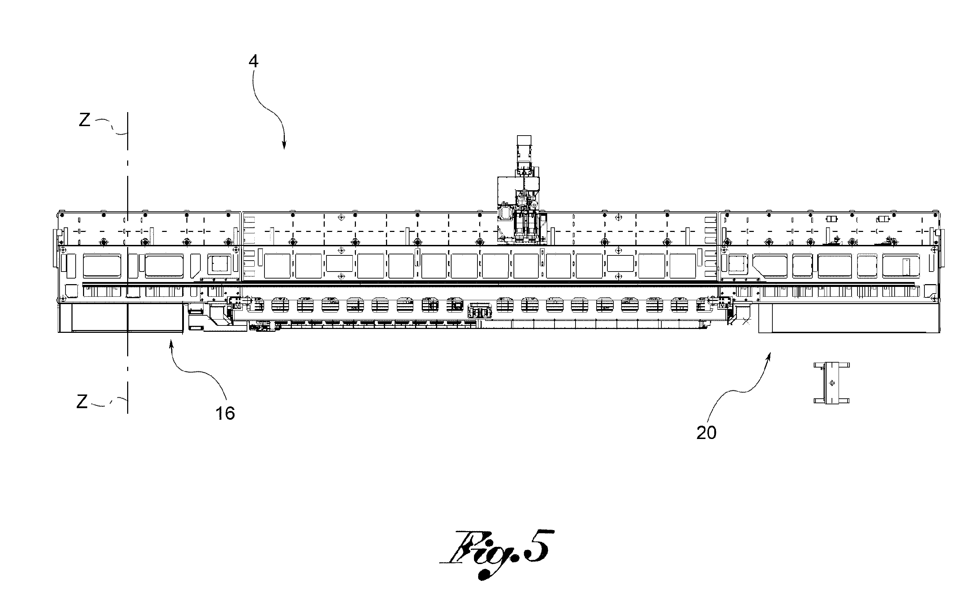

figure 5 shows a ground view of the work centre in figure 1, from the side of the arrow V in figure 1;

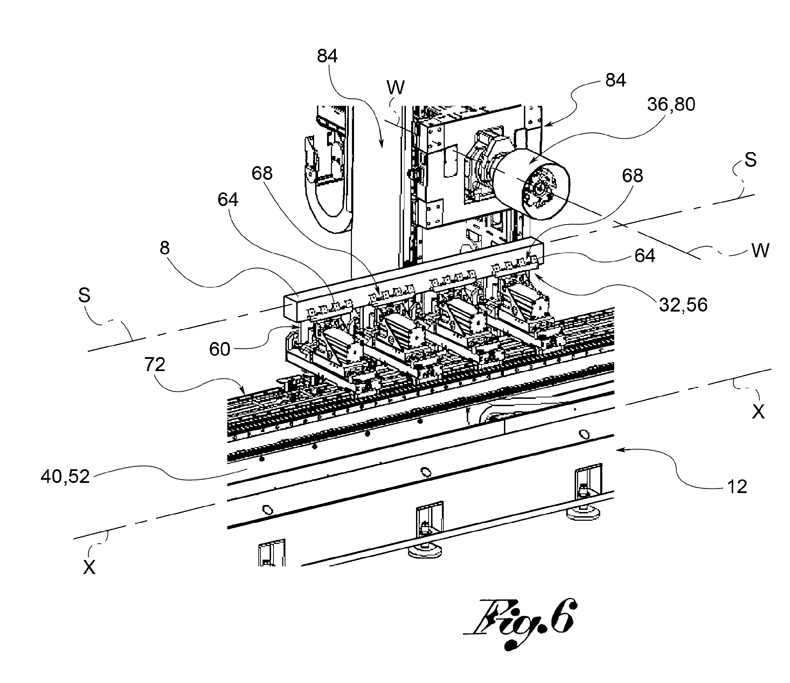

figure 6 shows an enlarged perspective view of the detail VI in figure 1;

figure 7 shows a front view of the work centre in an operative condition of exchanging pieces;

figure 8 shows the enlarged detail VIII in figure 7;

The elements or parts of elements common to the embodiments described below will be indicated using the same reference numerals.

With reference to the aforesaid figures, reference numeral 4 globally denotes a work centre for tenoning, drilling, milling and profiling operations of elongated pieces 8, having a main extension S-S, in particular for making wooden doors and windows.

The work centre 4 comprises a base 12 which extends mainly in a longitudinal direction X-X from a first to a second end 16, 20 along said longitudinal direction (X-X) and a portal structure in relation to said base 12,comprising a pair of uprights 24 connected by a crossbar 28.

The uprights 24 extend substantially in a vertical direction Y-Y perpendicular to said longitudinal direction X-X, as well as to said base 12.

The work centre 4 further comprises at least one pair of gripping elements 32 to grip the piece 8, move it and block it during the boring, tenoning, drilling and milling operations, as well as at least one operating head 36 fitted with respective tools suitable for processing the pieces 8.

Advantageously, said gripping elements 32 are respectively mounted on a first and on a second piece-holder carriage 40, 44, wherein said piece-holder carriages 40,44 are opposite each other in a vertical direction Y-Y.

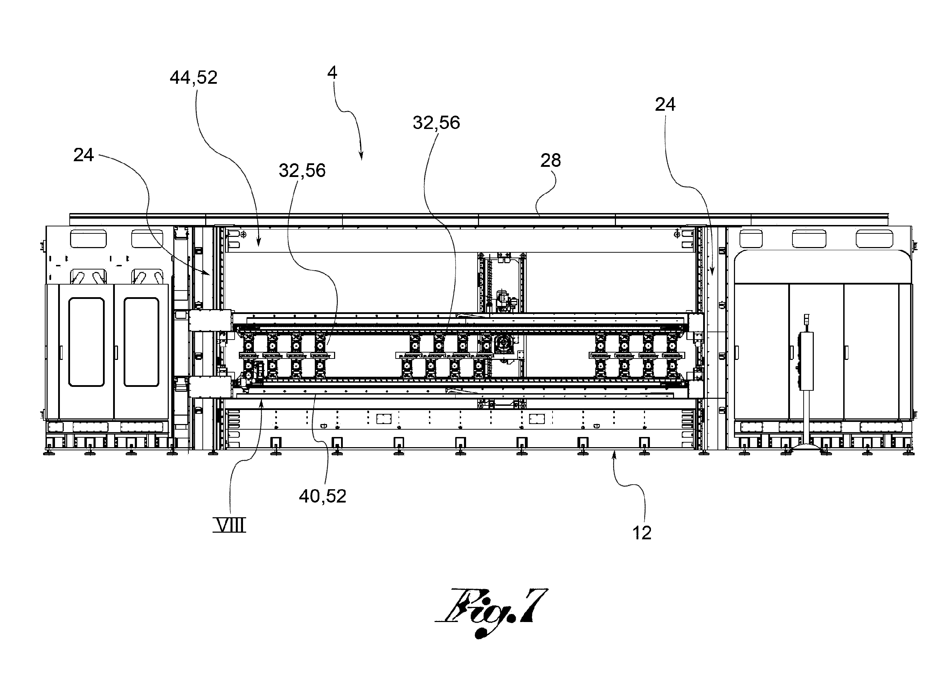

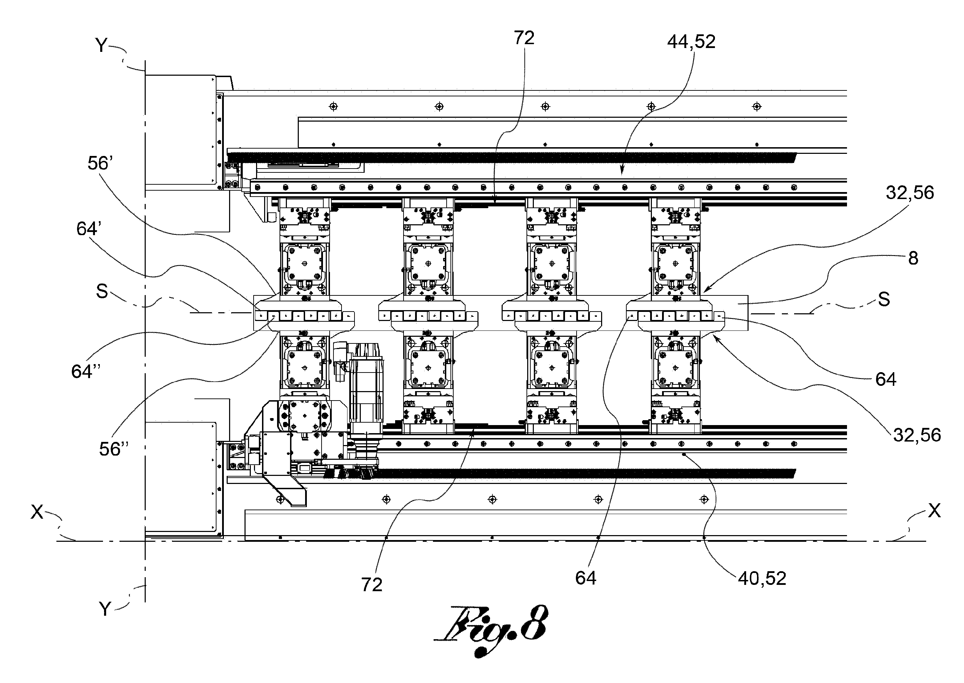

Advantageously, the first and the second piece-holder carriages 40,44 are independently mobile in a vertical direction Y-Y so as to be able to move the piece 8 and approach each other to exchange the piece 8 in the vertical direction Y-Y, as shown for example in figures 7 and 8.

The vertical translation movement of the piece-holder carriages 40, 44 may be guided and controlled in various ways: preferably, both the piece-holder carriages are vertically mobile in the vertical direction Y-Y, in both directions.

The piece-holder carriages 40, 44 are axially mobile along vertical guides 48, parallel to said vertical direction Y-Y and preferably joined to said uprights 24.

According to one embodiment, the piece-holder carriages 40, 44 comprise crossbars 52 which extend longitudinally between the first and the second ends 16,20 of said base 12.

According to one embodiment, the gripping elements 32 each comprise a pair of jaws 56 mobile in a transversal direction Z-Z when opening and closing, perpendicular to said vertical Y-Y and longitudinal X-X directions, so as to block the piece on sides perpendicular to said transversal direction Z-Z.

Preferably, between said jaws 56, the gripping elements 32 comprise at least one support 60 suitable for receiving the piece 8 before the relative blocking between the jaws 56. The support 60 therefore has the function of supporting the piece before this is gripped and automatically straightened by the clamping movement of the jaws 56. In other words, the piece does not need to be pressed against a relative support plane, but need only be laid on the relative support to then be clamped directly between the jaws 56: the closure movement of these making it possible to contemporarily straighten and block the piece 8.

According to a possible embodiment, the jaws 56 comprise a plurality of fingers 64 spaced at a constant pitch from each other, in said longitudinal direction X-X, in a comb arrangement, so as to be able to contemporarily grip the piece 8 in separate gripping points in the longitudinal direction X-X. In other words, the fingers 64' of a first jaw 56' have between them slots or cavities 68 which permit their reciprocal penetration with the fingers 64" of a second jaw 56" opposite the first jaw 56' in the vertical direction Y-Y.

In other words, the gripping elements 32 of opposite piece-holder carriages 40, 44 in said vertical direction Y-Y are shaped so as to be able to reciprocally penetrate each other in a comb arrangement to allow the exchange of the piece 8 between said carriages 40,44.

Preferably, the gripping elements 32 are mobile in relation to the respective piece-holder carriages 40, 44 along longitudinal guides 72 parallel to said longitudinal direction X-X, so as to be able to grip the piece 8 in separate points and/or move it in said longitudinal direction X-X.

Preferably, each piece-holder carriage 40, 44 comprises at least one group of gripping elements 32, alongside each other in a longitudinal direction X-X and independently operable. This way it is possible to contemporarily grasp a plurality of pieces 8. In the appended figures each piece-holder carriage 40, 44 comprises three gripping elements 32: such indication is generic and should in no way be considered limiting.

Preferably, the at least one processing head 36 can be moved independently of said piece-holder carriages 40,44 and of said gripping elements 32.

The at least one operating head 36 comprises at least one tool 80 having a mandrel axis W-W perpendicular to the direction of exchange of the pieces, that is to say perpendicular to the vertical direction Y-Y.

For example, the at least one operating head 36 is supported by at least one bracket 84 positioned parallel to the vertical direction Y-Y.

The bracket 84 is able to slide axially along at least one track 88 positioned parallel to the longitudinal direction X-X, by means of relative movement devices.

For example, the bracket 84 is supported by at least one lower track 90 joined to said base 12.

According to one embodiment, the bracket 84 is supported by an upper track 92, opposite the lower track 90 in said vertical direction Y-Y, and secured to said crossbar 28 of the portal structure.

The movement devices of the bracket 84 comprise a pair of pinions 96 engaging in a rack 100 attached to said lower track 90.

The bracket 84 also comprises motor devices suitable for translating the at least one operating head 36 along the bracket 84, parallel to the vertical direction Y-Y.

As may be appreciated from the description, the work centre according to the invention makes it possible to overcome the drawbacks of the prior art presented.

In fact, the work centre according to the present invention permits complete processing of the elongated pieces to be performed, that is tenoning, drilling, boring, milling and profiling operations in a short time and with extremely reduced processing tolerances.

Thanks to the substantially vertical position of the work centre, the overall space occupied by the work centre is considerably reduced.

In addition, the structure of the work centre is lighter than that of those with a conventional horizontal extension. For example, the guides of the processing heads in fact prove smaller in size given that they are supported by the base. The over sizing of the horizontal structures of the prior art, in which the processing heads are supported by sturdy overhanging crossbars, is thereby avoided.

In addition, thanks to its vertical arrangement the work centre of the present invention enables the use of horizontal support planes typical of the vertical structures, to be abolished. In fact, in work centres with a horizontal extension, the piece is pressed against a special abutment support plane to enable straightening before the relative gripping. In the work centre according to the invention rather it is possible to simply rest the piece on the support positioned between the jaws and then clamp the jaws: the clamping action in itself directly performs straightening of the piece, thereby enabling the construction of expensive abutments to be avoided as well as the performance of specific straightening procedures by thrust means pushing the piece against said abutment.

In other words, the gripping means according to the present invention succeed in first aligning and then blocking the piece to be processed by means of a single clamping of the jaws.

The work centre according to the present invention has an exceptional price/productivity ratio compared to the work centres of the prior art.

In addition, the work centre according to the present invention makes it possible to make finished pieces with extremely limited dimensional tolerances, even better than the tolerances which can be achieved with the horizontal extension work centres of the prior art.

It follows that the pieces obtained are of exceptional quality and permit rapid assembly operations, practically annulling the presence of discards.

A person skilled in the art may make numerous modifications and variations to the work centres described above so as to satisfy contingent and specific requirements, all contained within the sphere of protection of the invention as defined by the appended claims.

## Claims

1. Work centre (4) for drilling, milling, tenoning and profiling operation of elongated pieces (8), having a main extension (S-S), comprising:
- a base (12) which extends mainly in a longitudinal direction (X-X), from a first to a second end (16, 20),
- a portal structure in relation to said base (12), comprising a pair of uprights (24) connected by a crossbar (28), the uprights (24) extending substantially in a vertical direction (Y-Y) perpendicular to said longitudinal direction (X-X),
- at least one pair of gripping elements (32) to grip the piece (8), move it and block it during the drilling, milling, tenoning and profiling operations,
- at least one operating head (36) suitable for processing the pieces (8),
**characterised by** the fact that
- said gripping elements (32) are respectively mounted on a first and on a second piece-holder carriage (40,44), wherein said piece-holder carriages (40,44) are opposite each other in said vertical direction (Y-Y);
- wherein said first and second piece-holder carriages (40,44) are independently mobile in a vertical direction (Y-Y) so as to be able to move the piece (8) and exchange the piece (8) with each other in the vertical direction (Y-Y),
- the at least one operating head (36) being mobile independently of the piece-holder carriages (40,44) and of the gripping elements (32).

2. Work centre (4) according to claim 1, wherein said piece-holder carriages (40,44) are axially mobile along vertical guides (48) parallel to said vertical direction (Y-Y) and joined to said uprights (24).

3. Work centre (4) according to claim 1 or 2, wherein said piece-holder carriages (40,44) comprise crossbars (52) which extend longitudinally between the first and the second end (16,20) of said base (12).

4. Work centre (4) according to any of the previous claims, wherein said gripping elements (32) each comprise a pair of jaws (56) mobile in a transversal direction (Z-Z) when opening and closing, perpendicular to said vertical (Y-Y) and longitudinal (X-X) directions, so as to block the piece (8) on sides perpendicular to said transversal direction (Z-Z).

5. Work centre (4) according to claim 4, wherein between said jaws (56), the gripping elements (32) comprise at least one support (60) suitable for receiving the piece (8) before the relative blocking of the jaws (56).

6. Work centre (4) according to claim 4 or 5, wherein said jaws (56) comprise a plurality of fingers (64) spaced at a constant pitch from each other, in said longitudinal direction (X-X), in a comb arrangement, so as to be able to contemporarily grip the piece (8) in separate gripping points in the longitudinal direction (X-X).

7. Work centre (4) according to any of the previous claims, wherein said gripping elements (32) are mobile in relation to the respective piece-holder carriages (40,44) along longitudinal guides (72) parallel to said longitudinal direction (X-X), so as to be able to grip the piece (8) in separate points and/or move it in said longitudinal direction (X-X).

8. Work centre (4) according to any of the previous claims, wherein the opposite gripping elements (32) of the piece-holder carriages (40,44) in said vertical direction (Y-Y)are shaped so as to be able to reciprocally penetrate each other in a comb arrangement to allow the exchange of the piece (8) between the piece-holder carriages (40,44).

9. Work centre (4) according to any of the previous claims, wherein each piece-holder carriage (40,44) comprises at least one group of gripping elements (32), alongside each other in a longitudinal direction (X-X) and independently operable.

10. Work centre (4) according to any of the previous claims, wherein said at least one operating head (36) comprises at least one tool (80) having a mandrel axis (W-W) perpendicular to the direction of exchange of the pieces (8), that is to say perpendicular to the vertical direction (Y-Y).

11. Work centre (4) according to any of the previous claims, wherein the at least one operating head (36) is supported by at least one bracket (84) positioned parallel to said vertical direction (Y-Y).

12. Work centre (4) according to claim 11, wherein said bracket (84) is able to slide axially along at least one track (88) positioned parallel to said longitudinal direction (X-X), by means of relative movement devices.

13. Work centre (4) according to claim 11 or 12, wherein the bracket (84) is supported by at least one lower track (90) joined to said base (12).

14. Work centre (4) according to claims 12 or 13, wherein said movement devices comprise a pair of pinions (96) engaging in a rack (100) attached to said lower track (90).

15. Work centre (4) according to any of the claims from 11 to 14, wherein the bracket (84) is supported by an upper track (92), opposite the lower track (90) in said vertical direction (Y-Y), and secured to the crossbar (28) of the portal structure.

16. Work centre (4) according to any of the claims from 11 to 15, wherein said bracket (84) comprises motor devices suitable for translating the at least one operating head (36) along the bracket (84) parallel to the vertical direction (Y-Y).
